# EUROPEAN PATENT APPLICATION

(11) **EP 2 946 813 A1**
(43) Date of publication of application: **25.11.2015**
(21) Application number: 14472007.5
(22) Date of filing: 22.10.2014
(51) Int. Cl.: A62D 3/30, B09B 3/00, C04B 14/40, A62D 101/41

(54) **METHOD AND COMPOSITIONS FOR SELECTIVE ELIMINATION OF ASBESTOS FROM ASBESTOS-CEMENT PRODUCTS AND TOTAL DETOXIFICATION OF DECAY PRODUCTS**

(30) Priority: 21.05.2014 BG 11176314
(71) Applicant: Euro Environmental Services Ltd, 4002 Plovdiv (BG)
(72) Inventor: Coa, Mauro, 46044 Goito (Mantova) (IT)

(57) **Abstract**

The method ensures total removal of asbestos from the asbestos-cement products and total detoxification of decay products, using selective solution and capsulation of the residual sheets.

The final treated product can be used without problem as isolating building material.

The capsulation of the products with potassium water glass give to the final sheets the property of acid-resistant concrete, reduce the water absorption 2-3 times and add antibacterial and fungicide characteristics.

The waste dissolvent does not pollute the environment and after neutralization with Ca(OH)₂, can be used as a source for CaCl₂ and MgCl₂, which have wide application in building industry and other fields.

## Description

### Techniques' Field

The invention is for a method and composition of solutions for selective elimination of asbestos from asbestos-cement products and total detoxification of decay products

### Background of the invention

Under the name "asbestos" are known fiber-form varieties of some silicate minerals from the group of serpentinites and amphibole. This cumulative term determine the common morphological properties and physical characteristics of these minerals, expressed in threadlike form of crystals, their ability to split to tiny fibers with nano diameters, high mechanical strength and elasticity. The split asbestos fibers possess high adsorption ability. Asbestos are thermal nonconductive dielectrics.

The main representative of serpentinite group is the chrysotile-asbestos with chemical formula H₄Mg₃Si₂O₉ and crystalo-chemical formula Mg₆[Si₄O₁₀].(OH)₈. The chrysotile asbestos has melting point 1550 °C. Maximum bending strength 3000 MPa, resistant in alkaline media, dissolved in hydrochloric acid, forming fiber SiO₂ skeleton. Chrysotile asbestos is 95% of the totally used asbestos.

Amphibole group of asbestos is represented by 20 minerals. The main structural union of amphibole is [Si₈O₂₂(OH)₂]⁻¹⁴, where the 14 valences are saturated with ions of Mg, Fe, Al and alkaline metals. All amphibole asbestos are acid resistant.

At the beginning of XX century Ljudvig Gatchek patented new building material and produced the first asbestos-cement sheets by hardening a suspension from Portland cement and asbestos fibers. In 1906 in Kazale, Monferatto, are produce the first asbestos-cement tubes. In 1912 the company "Eternite" patented machinery for the production of non-seam tubes. During the years millions of asbestos-cement products had been produced. During the last decade of XX century new technologies were developed for formation of asbestos-cement products by extrusion. These technologies allowed the production of very complex by shape and with exact dimensions asbestos-cement products.

Practice, medical statistics and researches showed that the usage of asbestos and asbestos-containing products by liberation of fine fibers can cause asbestosys, mezotelioma and lung cancer. According Directive 1999/77/EO of the EU from 26.07.1999, coming in action from 01.01.2005 all asbestos fibers and products, containing them are forbidden to be used.

It is known methods for active protection of asbestos-cement products, mainly tubes, from corrosion, dust and spray of asbestos particles in the air, by painting protective cover. As materials for protective covers are used resins and bitumen with suitable organic thinners. This methods proof their efficiency for protection of asbestos-cement tubes, but they are not suitable for other asbestos-cement products, because of their color. Ecological problem is the usage of organic thinners.

Experiments are made for using different varnishes for protective covers, but they are not widely spread because of their high cost and mainly because of destruction of the cover by appearing a lot of cracks.

A method for thermal destruction of asbestos-cement at 1400 °C and then cutting and milling is patented. The disadvantages of this technology is the problem for heating the asbestos-cement, which is a thermal-isolating material, the big consumption of energy and the problems, connected with the deposit of the milled waste.

Recently several patents were published, regarding the deactivation of asbestos-cement products:
- American patent 3708014 -water solution of hydrochloric and fluoric acids, used for 98% destruction of asbestos;
- Japanese patent WO/2008/146418-04.12.2008 - Method for detoxication of asbestos and water solution for deactivation of
- Technology for destruction of waste asbestos by acidic gas, obtained from the decay of CHClF₂

Regarding the above patents and others like them, it must be considered that the fluorine is the most electrical-negative element. Regarding the action on human organism the fluorine affect different ferments as proto-plasmic poison. The fluorine compounds irritate mucous membranes of upper airways, lungs and the stomach. Even 0,003% solution of HF acid irritates the skin. 1gr. of NaF causes death in 50% of the cases. The leta; dose for Na₂SiF₆ for people is 4 g. To avoid intoxication is necessary to have secure ventilation, hermetization of the equipment and communications and usage of individual protective products. In the industrial premises it is necessary to control the concentration in the air of fluorine compounds.

The aim of the invention is to develop a composition and method for total removal of asbestos from the asbestos-cement products as the residual product is encapsulated and the purification residue to be complete innocuous and to have consumer's value.

### Technical essence of the invention

The Task of the invention is solved by developing selective dissolvent for asbestos in asbestos-cement products.

The main component of the solution - dissolvent is the magnesium salt of hydro-silicon-fluorine acid - MgSiF₆.6H₂O.

Hydro-silicon-fluorine acid is unique acid, because fluorine is the only halogen able to form silicon-containing acid. This acid is not known in anhydrous form. Generally it is used as 30-35% water solution.

The crystal-hydrate of its magnesium salt MgSiF₆.6H₂O is a coordination compound. As it is known the complex compounds have specific structure. They are chemical compounds with complex composition, in which there is one central atom (complex-former) and connected with it molecules or ions, the so-called ligands. The quantity of the ligands is 4 or 6 and it depends on the coordination number. The central atom and the ligands form inner sphere. Outer sphere of complex compounds are ions, charges of which compensate the charge of the inner sphere. The solutions of complex compounds during hydrolysis do not decay to ions from which they are formed, but they decay to complex ions, which are grouped around the complex-former atom. The coordination compounds in solution have ordered structure like crystal structure. The theory of forming and destruction of coordination compounds is very complex and include the theory of molecule orbitals, spatial interpretation of coordination numbers, the theory of ligand's field and theory of crystal filed. Leading in practical work and solutions of complex compounds is the accounting of constant of complex' instability.

The selective dissolvent of asbestos in asbestos-cement products is a water solution of technical hydrochloric acid - HCl and MgSiF₆.6H₂O. The concentration of the acid vary from 15-30% volumic, and the concentration of MgSiF₆.6H₂O is 5-10 mass%. The concentration of the solution is selected depending on the density of the asbestos-cement that will be processed. The process of treatment must be done at temperature 15-25°C.

Parallel with the dissolution process of asbestos, the other action take place between the MgSiF₆ and the available in the Portland cement Ca(OH)₂ and CaCO₃:

CaCO₃ + MgSiF₆ = CaF₆MgF₂ + SiO₂ + CO₂,

where CaF₆MgF₂ is an insoluble compound, and the carbon dioxide is liberated in the air.

During the soaking of the cut asbestos-cement in the selective dissolvent an intensive reaction takes place. It is observed how from every asbestos fiber starts the liberation of bubbles chains. The liberation of bubbles continue up to the complete dissolution of the asbestos. From the asbestos-cement is extracted the whole "asbestos armature" and it becomes a system with channels, with reinforced walls by the new formed insoluble compound-CaF₆MgF₂. By this treatment the treated cement preserve its thermal-isolating properties.

The control over the selective dissolution of asbestos from the asbestos-cement products can be done by: Visually-by the liberation of gas bubbles; by change of the color, pH and density of the solution, measured in °Be; by mass loss of control samples from asbestos-cement and instrumental methods: X-ray-phase analysis, analysis with scanning-electronic microscope.

The solution for capsulation of the residual, free of asbestos, product is 50-80% K water glass - K₂O.nSiO₂.mH₂O with modulus n >3 and density 1,3-1,42g/cm³ and additives of Aerosile-200 in quantity of 40-60 g/l, ZnO - 40-60 g/l and methyl-cellulose or other cation-active SAS in quantity 10-15 g/l. The function of this solution is to form a film, that will totally enclose the cement product. The contact with the solution may be done by soaking once or twice with intermediate period of 8-12 hours for drying the product. If better decorative characteristics should be obtained, then to this solution may be added titanium dioxide or alkaline resistant color pigment.

The process of purification of asbestos-cement from asbestos includes the following operations:
1. Washing with water the waste asbestos-cement sheets;
2.Wetting, by spray or soak, in solution of magnesium chloride with density 8-12°Be or solution of poly-ethylene oxide (Badimol) with concentration 0,1%. The wetting is done to prevent the formation of dust during the cutting of the asbestos-cement sheets;
3. Cutting the asbestos-cement sheets to pieces with size 1x1, 2x2cm or bigger, depending of their application after the treatment;
4. Soaking in the selective dissolvent of cut asbestos-cement in plastic containers for 24-48hours;
5. Drying of purified asbestos-cement on open air for 24-48hours;
6. Treatment of the free from asbestos material with the solution for capsulation;
5. Neutralization of the used solution with lime milk up to pH-6;
6. Separation of the liquid phase of the neutralized solution from the sediment and their utilization.

### The advantages of the invention are:

- Complete extraction and disposal of the asbestos, contained into the asbestos-cement products;
- The components of the solution are easy to find and cheap;
- The final treated product has commercial value and can be used without no problem as isolating building material;
- The waste dissolvent, after neutralization with Ca(OH)₂, can be used in agriculture as additive to acidic soils. The liquid phase, which is a solution of CaCl₂ and MgCl₂ can be used under the form of solution or dry mix in building industry for acceleration of concrete' hardening during winter time. The separated from this solution salts can be used for covering of icy roads.
- The capsulation of the products with K water glass cover possesses the property of acid-resistant concrete. Reduce the water absorption 2-3 times and add antibacterial and fungicide characteristics

### Examples of the invention:

1. Wave-like asbestos-cement sheet with density 1,8 g/cm3, cut to pieces with dimension 2,5x2,0x0,8cm. is soaked in solution, made of 25% HCl with added 5% of MgSiF₆.6H₂O for 48 hours. The solution has initial density 10°Be and pH=0,5. After the treatment the mass loss of the sample is 30,67%.After drying for 48 h. on open air the mass loss of the sample becomes 47,5%. The residual solution with density 18 °Be and pH=1 is neutralized with lime milk up to pH=6. The made X-ray-phase analysis, microscope observations show no trace of asbestos in the so treated sample.
2. Wave-like asbestos-cement sheet with density 1,8 g/cm3, cut to pieces with dimension 1x1x0,8cm. is soaked in solution, made of 15% HCl with added 5% of MgSiF₆.6H₂O for 48 hours. The solution has initial density 7,5°Be and pH=1. After the treatment the mass loss of the sample is 30,30%.After drying for 48 h. on open air the mass loss of the sample becomes 49,00%. The sample is treated with the solution for capsulation by dipping and then drying in open air for 24h. The residual solution with density 15,5 °Be and pH=1,5 is neutralized with lime milk up to pH=6. The made X-ray-phase analysis and microscope observations show no trace of asbestos in the so treated sample.

## Claims

1. Method for extraction of asbestos from asbestos-cement products by selective solution and treatment of the cleansed products with capsulation solution, characterized with the fact that the asbestos-cement sheets are pre-wetted by spraying or dipping in solution of MgCl₂ with density 8-12°Be or solution of Badimol with concentration 0,1%; after that the asbestos-cement sheets are cut to size 1x1, 2x2cm. or bigger and they are put into plastic tanks and soaked for 24-48 h. in the solution for selective dissolution of asbestos; after soaking the particles dry on open air for 24-48h. and treated with the capsulation solution; the waste solution is neutralized with lime milk up to pH=6 and after decantation it is re-used and utilized.

2. Composition for selective dissolvent of asbestos from asbestos-cement products, according claim 1, represented water solution of 15-30 volumic % technical hydrochloric acid and 5-10 mass% of MgSiF₆.6H₂O.

3. Composition for capsulation, according claim 1, represented 50-80% water solution of potassium water glass with n>3 and density 1,3-1,42 g/cm³, with additives of 40-60 g/l Aerosile 200, 40-60 g/l ZnO - finely milled and 10-15 g/l methyl-cellulose or other cation-active SAS, the contact with the material is done by immersion one or two-times with intermediate period of 8-12 hours for drying the material.
